**Europäisches Patentamt**

**European Patent Office**

**Office européen des brevets**

(11) Publication number: **0 183 814**
**B1**

# EUROPEAN PATENT SPECIFICATION

(45) Date of publication of patent specification: **23.08.89**

(21) Application number: **85902997.7**

(22) Date of filing: **20.06.85**

(86) International application number:
**PCT/FI85/00059**

(87) International publication number:
**WO 86/00403 16.01.86 Gazette 86/02**

(51) Int. Cl.⁴: **G 01 F 1/10**

(54) **MEASURING APPARATUS FOR MEASURING FLOW AND/OR ITS CHARACTERISTICS.**

(30) Priority: **21.06.84 FI 842542**

(43) Date of publication of application:
**11.06.86 Bulletin 86/24**

(45) Publication of the grant of the patent:
**23.08.89 Bulletin 89/34**

(84) Designated Contracting States:
**AT BE CH DE FR GB IT LI NL SE**

(56) References cited:
**DE-A-1 573 049**
**DE-A-2 750 269**
**SE-B- 399 961**
**SE-C- 138 403**
**US-A-3 990 305**
**US-A-4 308 755**

(73) Proprietor: **VESINIEMINEN KY**
**Hopunkatu 9**
**SF-38200 Vammala (FI)**

(72) Inventor: **NIEMINEN, Jorma, Kalervo**
**Pikkusuonkatu 6**
**SF-38200 Vammala (FI)**

(74) Representative: **Zipse + Habersack**
**Kemnatenstrasse 49**
**D-8000 München 19 (DE)**

Courier Press, Leamington Spa, England.

## Description

The present invention relates to a measuring apparatus for measuring flow, such as liquid or gas flow, and/or its characteristics, according to the preamble of claim 1.

The measuring apparatus of the invention is designed for measuring a physical or chemical magnitude of the medium substance, the said magnitude being for instance volume flow, thermal capacity, or the like.

In the prior art there are known such measuring devices where a rotor is installed coaxially within the flow pipe, and in front of the rotor there is placed a stationary control blade arrangement which deviates the flow from the principal flowing direction. By aid of the control blade arrangement, the directly proceeding flow receives a screw-like or equivalent velocity component, which in turn makes the rotor to rotate. The speed of rotation of the rotor is determined by means of a revmeter, and on the basis of the obtained result it is possible to calculate the flowing velocity and further the volume flow, or these values may be obtained directly by means of a suitable electronic device.

In the prior art there are also known such caloric capacity meters where the liquid flows through a turbine installed within the flow pipe. Changes in the liquid temperature have a suitable effect on the bimetallic turbine blades, so that the blade angle is changed. Thus, the change in the temperature also causes a change in the geometry of the blades, and further in the rotation speed of the turbine.

There is also known a caloric capacity meter where the turbine or rotor and the bimetallic control member reacting to the changes in the temperature are separate members.

The use of the above described measuring apparatuses brings forth several drawbacks and problems. Disturbances and malfunction are regular difficulties. Separate measuring apparatuses are needed for measuring flow and/or its various characteristics. Among the prior art devices, none are suitable for measuring several different magnitudes. A measuring apparatus of a special type is generally required for a special target. This apparatus is not replaced until it is out of order or needs maintenance. The replacement of a measuring apparatus is always costly.

DE—A—1 573 049 discloses a liquid flow meter with a measuring device being formed as a replacement piece to be inserted into the flow tube. The measuring device includes ribs of a flow smoothener which ribs may be exchanged by other ribs having a different angle in order to change the fault curve.

The object of the present invention is to eliminate, among others, the above described drawbacks and to realize a flow-operated measuring apparatus where, for instance during maintenance, only a certain part can be replaced through a simple procedure for achieving modification and application of the measuring device according to specific needs. This is achieved by means of the invention which are claimed by claim 1.

Among the advantages of the measuring apparatus of the present invention, there are pointed out its simple structure, its remarkably easier maintenance and its adaptability within the basic structural design, which also leads to decreased manufacturing costs.

According to the principal idea of the invention the housing of the measuring apparatus, which housing comprises means for connecting the apparatus to the surrounding flow circuit and a detector whereby the rotation of the rotor or equivalent can be observed, is identical in all of the modifications of the said measuring apparatus. The inside of the housing is formed of a replacement part, i.e. a separate tubular part, wherein there is installed for example a rotor and a flow control member, and possibly also a sensor which measures such properties—for instance temperature—of the flow that have an effect on the rotor and the control member.

The described structure of the measuring apparatus allows for an easy replacement of the movable and erodible parts of the apparatus, which are in contact with the flow; the tubular replacement piece is removed from within the principal housing, and a new replacement piece is installed. In cases of malfunction, for example, it is not necessary to replace the whole measuring apparatus, which means an essential decrease in the upkeep and maintenance costs. Moreover, the calibration of the apparatus, stipulated to be carried out at regular intervals, simply becomes unnecessary; it suffices to replace the tubular replacement piece with a new one. This leads to remarkable savings in the expenses, because now it is neither necessary to detach the measuring apparatus proper, to install a substitute apparatus nor to carry the apparatus proper to be readjusted by the responsible authority or office.

Within the structure of the basic housing, the present invention offers good possibilities for the modification and application of the measuring apparatus according to specific needs. If for instance the replacement piece is provided with a flow control member which sets the flow in a spiralling motion, which has a further influence in the rotation of the rotor, the measuring apparatus can be used for measuring volume flow owing to the specific replacement piece. Furthermore, if the replacement piece is provided with a suitable bimetallic sensor which sets the flow in a spiralling motion depending on the temperature, which motion again respectively influences the rotation of the rotor, the measuring apparatus is suited, owing to this specific replacement piece, for measuring the thermal energy contained in the flow, for instance the consumption of warm service water. Instead of a temperature-sensing element, other suitable sensors can also be employed for measuring the characteristics of the flow. Particularly suitable for this purpose are such sensors that change their appearance due to the influence of the magnitude to be measured.

In the following the invention is described in detail with reference to the appended drawings, where

Figure 1 is an illustration of a volume flow meter where a replacement piece according to the invention is employed, and

Figure 2 is an illustration of a caloric capacity meter of the flow, similarly provided with a respective replacement piece.

The measuring apparatuses illustrated in the drawings comprise the housing 1, through which the flow channel 2 runs. At both ends of the flow channel 2, the housing 1 is provided for instance with threadings 21, 22 as well as with matching connecting means for connecting the measuring apparatus to the pipework or equivalent flow circuit. In connection with the housing 1, there is also attached the sensor 3 for detecting the speed of rotation of the rotor or the like, and the protective cover 4 of the said sensor. The sensor 3 is connected, by means of the service connection 5, to the unit 6 processing the messages sent by the sensor, which unit 6 can be for example a calculator or a larger data processing unit.

Within the flow channel 2, there is fitted a detachable and replaceable tubular member, i.e. the replacement piece 7a. Its length is profitably about 3/4 of the length of the whole flow channel. Inside the replacement piece 7a there is installed a suitable turbine construction or flow control member and the rotor 10. The flow channel 2 is provided with the shoulder 8, against which the tubular piece 7a is positioned. Now the rotor 10 and the rotor revmeter are placed side by side. The shoulder 8 can be placed either at the distance of the length of the replacement piece 7a from the end of the flow channel 2, in which case the end of the replacement piece rests against the shoulder, or the shoulder 8 can be placed in the middle of the replacement piece as is illustrated in the drawing, so that an extra shoulder 9 is also arranged on the outer surface of the replacement piece 7a. It is advantageous that the other end of the replacement piece 7a is located within the flow channel 2, on the same level with the end of the housing 1. Thus the replacement piece can be easily removed from the flow channel 2. The replacement piece 7a can be locked into place in the flow channel by means of a suitable connecting means, such as an intermediate collar matched into the threading 22, or by means of some other fitting piece. The tube or collar of the replacement piece 7a can be manufactured of metal, such as steel, or of plastic.

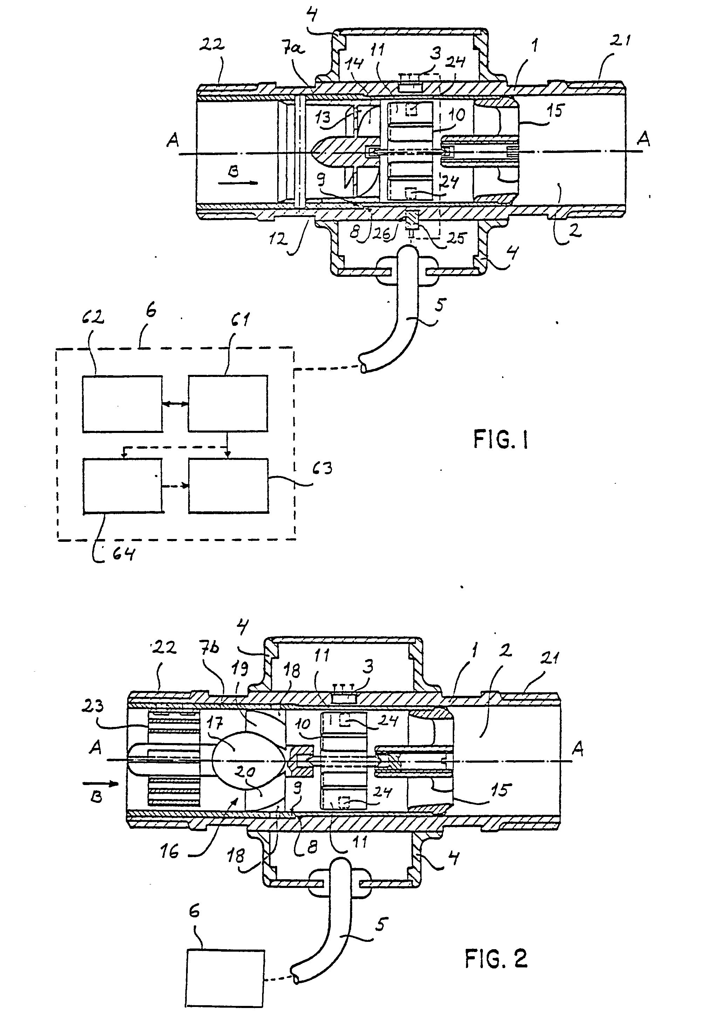

In the measuring apparatus of Figure 1, the replacement piece 7a is provided with the rotor 10 and the flow control member 12. The rotor 10 is fitted with bearings coaxially inside the replacement piece 7a, in between the boss of the control member 12 and the support member 15. The blades 11 of the rotor 10 are essentially parallel to their own rotation axis, the central axis A—A of the replacement piece 7a and to the flow channel 2. The flow control member 12 is installed in front of the rotor 10 with respect to the flow direction. The control member 12 is formed of a blade arrangement, the blades 13 whereof are placed in an angle deviant from the central axis A—A of the housing and of the rotor blades. Advantageously these blades are arranged to rotate in the direction of the central axis so that the flow channel is completely covered by the blades. Thus a direct flow, parallel to the flow channel, cannot in any circumstances proceed through the blade arrangement of the control member 12, but the flow always proceeds via the deflecting channels 14 located between the blades 13 and receives a spiralling motion component which is transversal to the flowing direction B. Thus even a slight flow within the flow channel makes the rotor 10 to rotate. As for the speed of rotation, it is directly comparable to the flowing speed and the volume flow in the channel.

In the measuring apparatus according to Figure 2, the replacement piece 7b is provided with such means that the apparatus functions as caloric capacity meter. Also in this case, the rotor 10 and the flow control member 16 are installed in the replacement piece 7b. The rotor 10 is attached with bearings similarly as in the case of the replacement piece of Figure 1, i.e. in between the boss of the control member 16 and the supporting member 15.

The control member 16 comprises two parts, which can be wound with respect to each other, i.e. the director 17 and the controller 18. The controller 18 is permanently fastened within the flow channel 2, and the director 17 is attached with bearings into the center thereof. In between the director 17 and the wall of the flow channel 2, there is installed a sensor. The sensor is a spiralling bimetal spring 23. The structure of the control member 16 is described in the US Patent Publication No. 4,750,726.

When the temperature of the flowing medium corresponds to a predetermined reference level, the director 17 and the controller 18 are at right angles to each other, and the flow proceeds in the principal flowing direction B directly and symmetrically via the channels 19, 20, around the director 17. Now the rotor 10 does not rotate. While the medium warms up, the bimetal sensor 23 detects the change and winds the director 17 by aid of the axis. As a consequence, the cross-sectional areas of the channels 19, 20 located between the director 17 and the controller 18 are changed, and the medium receives a spiralling motion component, which again makes the rotor to rotate.

In the above described measuring apparatuses, the sensor 3 attached to the housing 1 is advantageously a Hall sensor or a similar sensor detecting the changes within the magnetic field. The two blades 11 of the rotor 10, which blades are located symmetrically on opposite sides of the axis, are respectively provided with magnets 24. Now the sensor 3 detects the rotation of the rotor 10 as a change in the magnetic field, caused by the passing magnets 24. Other kinds of sensors, such as optical or the like, can also be employed.

The processing unit 6 for the messages sent by the sensor 3 is advantageously similar in all the different modifications of the measuring apparatus. It may comprise for example the central unit 61 and the first memory unit 62, the output device 63 and possibly the second memory unit 64, all connected to the central unit 61. The first memory unit 62 contains all relevant information of the replacement piece 7, i.e. its parameters, and thus also knows the nature of the measuring operation in question. By means of the central unit 61, the messages are processed by utilizing the information contained in the memory unit 62. Within the second memory unit 64, there can be recorded for instance the measuring results until they are written out by means of the output device 63 which can be a display terminal or a printer.

The above described measuring apparatuses are suited for measuring volume flow and the caloric capacity of the flow, i.e. the thermal energy contained in the flow. If desired, both measuring apparatuses can be modified to function either as a volume flow meter or a thermal energy meter. This is carried out by replacing the tubular members, i.e. the replacement pieces 7a, 7b so that they are provided with the necessary equipment for the desired measuring operation, and by replacing the memory unit 62 in the processing unit 6 with a memory unit corresponding to the respective replacement unit, or by replacing the respective part of the calculator. On the basis of this information contained in the memory unit 62 the central unit 61 defines either the volume flow in the flow channel 2, or the thermal energy contained in the liquid/gas passing through the flow channel.

In connection to the housing 1 of the measuring apparatus according to Figure 1, there can be arranged the sensor 25 measuring the temperature of the flow. This sensor is installed for instance within the bore 26 located in the housing. In case the temperature sensor 25 is not needed, the bore can be empty. The temperature sensor 25 can be easily connected to the above mentioned processing unit 6, for instance by means of the same wire as the sensor 3 detecting the rotation of the rotor 10.

It is advantageous that, while the replacement piece 7a, 7b is inside the housing 1, the bore 26 and the sensor 25 are in the vicinity of the disc of the rotor 10. Furthermore, the sensor 25 can, on the cross-sectional plane, be located in a position which is for example 15°—345° deviant with respect to the above mentioned sensor 3 measuring the rotation speed of the rotor. In Figure 1, the temperature sensor 25 is placed on the opposite side of the housing 1 with respect to the sensor 3. The proposed location of the temperature sensor 25 is advantageous because when passing the rotor 10, the flow has assumed at least a winding motion, in which case the flow temperature near the housing corresponds well to the real flow temperature.

It is pointed out that, although the invention has above been explained mainly with reference to two different measuring apparatuses, it is naturally clear that the replacement piece can be fitted into any apparatus measuring the properties of liquid or gas and employing a rotating rotor or an equivalent member, the rotation speed whereof is detected and the received reading further utilized in a desired fashion for example in a control process.

## Claims

1. A measuring apparatus for measuring flow, such as liquid or gas flow and/or its characteristics, the said apparatus comprising a housing (1) provided with a flow channel (2); a tubular member fitted inside the housing (1), the tubular member being formed as a replacement piece (7a), wherein there is coaxially installed a flow control member (12; 16) and thereafter, in the flowing direction, a rotor (10); and which housing (1) is provided with at least a rotor revmeter or equivalent detector (3) for determining the speed of rotation of the rotor (10) without mechanically touching the rotor; as well as connecting means (21, 22) for connecting the measuring apparatus into a flow circuit, characterized in that there exist other replacement pieces (7b), each of said other replacement pieces comprises, in addition to the said flow control members (12; 16) and rotor (10), a sensor (23) measuring certain characteristics of the flow, such as temperature, which sensor (23) affects the flow control member (12; 16) in accordance with the measured characteristic, and in that each of said other replacement pieces (7b) can be fitted in said housing (1) in place of said first mentioned replacement piece (7a).

2. The measuring apparatus of claim 1, characterized in that the measuring apparatus additionally contains a processing unit (6) for processing the messages sent by the detector (3), the said processing unit (6) comprising a central unit (61) and at least one memory unit (62) containing the information concerning the specific replacement piece (7a, 7b) employed in the measuring apparatus.

## Patentansprüche

1. Meßvorrichtung zur Strömungsmessung, beispielsweise eines Flüssigkeits- oder Gasflusses und/oder der Eigenschaften desselben, mit einem Gehäuse (1), welches mit einem Strömungskanal (2) versehen ist, einem ins Innere des Gehäuses eingepaßten, rohrförmigen Glied, welches als Austauschstück (7a) ausgebildet ist, worin koaxial ein Strömungssteuerglied (12; 16) eingebaut ist und danach in Strömungsrichtung ein Rotor (10), wobei das Gehäusse (1) mit mindestens einem Rotorumdrehungsmesser oder gleichwertigem Detektor (3) zur Bestimmung der Drehgeschwindigkeit des Rotors (10) ohne mechanische Berührung des Rotors versehen ist, sowie mit Verbindungsmitteln (21, 22) zum Einschalten der Meßvorrichtung in einen Strömungskreis, dadurch gekennzeichnet, daß weitere Austauschstücke (7b) bestehen, von denen jedes zusätzlich zu den Strömungssteuergliedern (12; 16) und dem Rotor (10) einen Meßfühler (23) aufweist, der bestimmte Eigenschaften der Strömung, beispielsweise Temperatur mißt, wobei der Meßfühler (23) das Strömungssteuerglied (12; 16) entsprechend der gemessenen Eigenscahft beeinflußt, und daß jedes der weiteren Austauschstücke (7b) in das Gehäuse (1) eingebaut werden kann an die Stelle des zuerste genannten Austauschstücks (7a).

2. Meßvorrichtung nach Anspruch 1, dadurch gekennzeichnet, daß die Meßvorrichtung zusätzlich eine Verarbeitungseinheit (6) zum Verarbeiten der vom Detektor (3) gesandten Nachrichten enthält, wobei die Verarbeitungseinheit (6) eine Zentraleinheit (61) und mindestens eines Speichereinheit (62) aufweist, welche die Information betreffend das spezifische, in der Meßvorrichtung verwendete Austauschstück (7a, 7b) enthält.

**Revendications**

1. Appareil de mesure pour mesurer un écoulement, tel qu'un flux liquide ou gazeux et/ou ses caractéristiques, ledit appareil comprenant un carter (1) muni d'un canal d'écoulement (2); un organe tubulaire logé à l'intérieur du carter (1), cet organe tubulaire étant conçu sous la forme d'une pièce interchangeable (7a) dans laquelle sont disposés, coaxialement, un élément (12; 16) de commande du flux et un rotor (10) lui succédant dans la direction de l'écoulement; et ledit carter (1) est équipé d'au moins un compte-tours rotorique ou détecteur équivalent (3) pour déterminer la vitesse de rotation du rotor (10) sans aucun contact mécanique avec ce rotor; ainsi que de moyens de raccordement (21, 22) pour raccorder l'appariel de mesure à un flux en circulation, caractérisé par la présence d'autres pièces interchangeables (7b), chacune de ces autres pièces interchangeables présentant, en plus desdits éléments (12; 16) de commande du flux et dudit rotor (10), un détecteur (23) mesurant certaines caractéristiques de l'écoulement, telles que la température, ledit détecteur (23) sollicitant l'élément (12; 16) de commande du flux en concordance avec la caractéristique mesurée; et par le fait que chacune desdites autres pièce interchangeables (7b) peut être logée dans ledit carter (1) à la place de ladite pièce interchangeable (7a) mentionnée en premier lieu.

2. Appareil de mesure selon la revendication 1, caractérisé par le fait que cet appareil de mesure renferme, additionnellement, un dispositif de traitement (6) pour traiter les messages délivrés par le détecteur (3), ledit dispositif de traitement (6) comprenant une unité centrale (61) et au moins une unité de mémorisation (62) contenant les informations relatives à la pièce interchangeable considérée (7a, 7b) utilisée dans l'appareil de mesure.

FIG. I

FIG. 2

1